(19) Europäisches Patentamt

European Patent Office

Office européen des brevets

(11) **EP 2 832 599 B1**

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(51) Int Cl.:
***B60T 8/1755*** *(2006.01)*   ***B60W 30/02*** *(2012.01)*

(21) Anmeldenummer: **14177046.1**

(22) Anmeldetag: **15.07.2014**

(54) **Verfahren und Vorrichtung zum Betreiben eines Fahrzeugs, Computerprogramm, Computer-Programmprodukt**

Method and device for operating a vehicle, computer program, computer program product

Procédé et dispositif de fonctionnement d'un véhicule, programme informatique et produit de programme informatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2013 DE 102013214991**
**08.08.2013 DE 102013215618**
**10.01.2014 DE 102014200299**

(43) Veröffentlichungstag der Anmeldung:
**04.02.2015 Patentblatt 2015/06**

(73) Patentinhaber: **ROBERT BOSCH GMBH**
**70442 Stuttgart (DE)**

(72) Erfinder:
• **Koenig, Lars**
**71723 Grossbottwar-Winzerhausen (DE)**
• **Merlein, Dominik**
**71634 Ludwigsburg (DE)**
• **Gutmayer, Benjamin**
**74206 Bad Wimpfen (DE)**

(56) Entgegenhaltungen:
**EP-A2- 1 435 318       DE-A1- 10 236 734**
**DE-A1-102004 035 004    DE-A1-102005 037 479**

EP 2 832 599 B1

**Beschreibung**

Die Erfindung betrifft ein Verfahren zum Betreiben eines Fahrzeugs, insbesondere Kraftfahrzeugs, das mindestens zwei betätigbare Aktuatoren aufweist, die ein Fahrverhalten, insbesondere ein Gierverhalten des Fahrzeugs bei Bedarf beeinflussen.

Ferner betrifft die Erfindung eine entsprechende Vorrichtung, ein Computerprogramm sowie ein Computer-Programmprodukt.

Stand der Technik

Verfahren der Eingangs genannten Art sind aus dem Stand der Technik bekannt. Durch den Einsatz von Aktuatoren, die das Fahrverhalten eines Fahrzeugs bei Bedarf beeinflussen, lässt sich beispielsweise die Fahrdynamik des Fahrzeugs verändern. Als entsprechende Aktuatoren sind beispielsweise automatische Bremseinrichtungen, eine Hinterachsenlenkung, Stabilisatoren oder dergleichen bekannt. Sie werden insbesondere dazu genutzt, dem Fahrzeug ein Drehmoment um die Hochachse, das sogenannte Giermoment, aufzuprägen. Dieses Prinzip machen sich heutzutage vor allem die sogenannten "ESP-Systeme" zunutze (ESP = Elektronisches Stabilitäts Programm), deren primäres Ziel die Stabilisierung des Fahrzeugs über hydraulische Bremseingriffe darstellt. In den letzten Jahren bieten einige Hersteller zusätzliche Fahrdynamik-Regelsysteme an, welche neben der Bremse auch zusätzlich Aktuatoren, wie beispielsweise die bereits genannte Hinterachslenkung, eine aktive Voderachslenkung, Stabilisatoren, geregelte Differenziale oder dergleichen ansteuern. Für das Betreiben dieser unterschiedlichen Aktuatoren existieren derzeit zwei grundsätzlich verschiedene Ansätze.

Zum einen ist es bekannt, den Aktuatoren jeweils eine eigenen Regler zuzuordnen, wobei diese Regler dann parallel zueinander arbeiten, um den Aktuatoren jeweils eine Stellgröße aufzuprägen. Bei den einzelnen Reglern handelt es sich dabei in der Regel um Gierratenregler. Nachteilig ist hierbei der erhöhte Abstimmungsaufwand der einzelnen Regler untereinander, der sich bei diesem koexistenziellen Lösungsansatz durch die Kopplung von Freiheitsgraden und die Rückwirkung der einzelnen Teilregler untereinander ergibt. Dieser Ansatz führt daher zu sehr aufwändigen Reglern, welche eine Vielzahl von Kennlinien, Aktivierungs- und Deaktivierungsbedingungen, Anregelschwellen, Hysterese-Elementen und dergleichen bedingen.

Während bei dem oben beschriebenen koexistenziellen Ansatz eine Vielzahl von Soll-Giermomenten und/oder Gierraten berechnet werden müssen, ist zum anderen ein Ansatz bekannt, bei welchem nur ein einziges Soll-Giermoment berechnet wird. Die Verteilung auf die verschiedenen Aktuatoren erfolgt dann in der Regel über einen Koordinator oder einen beliebig zu wählenden Optimierer, beispielsweise unter Beachtung des ausgenutzten Kraftschlusspotenzials aller Räder des Fahrzeugs. Nachteilig hierbei ist im Wesentlichen die nicht vorhandene Echtzeitfähigkeit des verwendeten Optimierers.

Aus der Offenlegungsschrift DE 10 2004 035 004 A1 ist bereits ein Verfahren zur Erhöhung der Fahrstabilität eines Kraftfahrzeugs bekannt, bei welchem eine modellgestützte Vorsteuerung genutzt wird, um ein kompensierendes Moment auf das Kraftfahrzeug aufzubringen. Aus der Offenlegungsschrift DE 102 23 734 A1 ist ein Verfahren bekannt, bei welchem ebenfalls zur Vorsteuerung auf Basis von vorgegebenen Werten zwei Aktuatoren angesteuert werden können. Weiterhin ist aus der Offenlegungsschrift DE 10 2005 037 479 A1 ein Verfahren bekannt, bei welchem die Übertragungsfunktion einer modellgestützten Vorsteuerung für zumindest zwei Freiheitsgrade in Abhängigkeit von einer Vorgabe eines Fahrers unabhängig voneinander auf unterschiedliche Werte einstellbar sind.

Offenbarung der Erfindung

Das erfindungsgemäße Verfahren mit den Merkmalen des Anspruchs 1 hat gegenüber dem bekannten Verfahren den Vorteil, dass in Abhängigkeit von nur einem Soll-Fahrverhalten des Fahrzeugs, beispielsweise Soll-Gierverhalten, Soll-Querbeschleunigungsverhalten, Soll-Schwimmverhalten, Soll-Wankverhalten, Soll-Kursverhalten oder dergleichen, mehrere Aktuatoren angesteuert werden, jedoch kein Rechenzeit-intensiver Optimierer benötigt wird. Bei dem neuen integrierten Ansatz zur Ansteuerung mehrerer Aktuatoren wird ein mathematisches Ersatzmodell, insbesondere ein nicht-lineares Ersatzmodell des Ist-Fahrzeugs verwendet, welches die Lateraldynamik von Kraftfahrzeugen bis in den Grenzbereich mit guter Genauigkeit abbildet, wobei anhand weniger physikalischer Fahrzeugparameter, wie beispielsweise Reibwerte, Seitenkraftsteifigkeit, Trägheitsmoment um die Hochachse, Lage des Schwerpunkts oder Radstand des Fahrzeugs, ebenso das Wunschverhalten des Fahrzeugs definiert werden kann. Erfindungsgemäß ist hierzu vorgesehen, dass die Aktuatoren in Abhängigkeit von mindestens einem Soll-Fahrverhalten, insbesondere Soll-Gierverhalten, des Fahrzeugs durch eine Kaskadenvorsteuerung betätigt werden. Während bei einer Kaskadenregelung mehrere Regler vorgesehen sind, deren zugehörige Regelkreise mit Rückführungen ineinander geschachtelt sind, ist bei der Kaskadenvorsteuerung eine Rückführung nicht zwingend notwendig. Dadurch entfällt die Notwendigkeit einer Abstimmung der Zeitkonstanten der einzelnen Kaskaden.

Erfindungsgemäß ist vorgesehen, dass für die Kaskadenvorsteuerung Ersatzmodelle für das Fahrzeug kaskadenartig berücksichtigt werden, wobei mindestens zwei unterschiedliche Soll-Ersatzmodelle erstellt werden, die sich durch wenigstens einen betätigbaren Aktuator voneinander unterscheiden. Es werden also Ersatzmodelle für das Fahrzeug vorgesehen, die in der Kaskadenvorsteuerung berücksichtigt werden. Unter dem kaskadenartigen Berücksichtigen ist hierbei zu verstehen, dass die Ersatzmodelle kaskadenartig miteinander verknüpft werden. Die Soll-Ersatzmodelle unterscheiden sich in der Anzahl und/oder der Art der Aktuatoren, wobei sich die Soll-Ersatzmodelle um mindestens einen betätigbaren Aktuator unterscheiden, so dass das jeweilige Soll-Ersatzmodell im Wesentlichen durch wenigstens einen betätigbaren Aktuator maßgeblich beeinflusst wird. Dadurch lassen sich die Aktuatoren und die dadurch jeweils erreichbaren Einflüsse vorteilhaft bei der Kaskadenvorsteuerung berücksichtigen und umsetzen.

Weiterhin ist vorgesehen, dass den Soll-Ersatzmodellen jeweils dasselbe Soll-Gierverhalten vorgegeben wird. Jedes der Soll-Ersatzmodelle wird somit zum Erreichen des Soll-Gierverhaltens des Fahrzeugs abhängig von den anderen Soll-Ersatzmodellen angesteuert.

Ferner ist erfindungsgemäß vorgesehen, dass ein Soll-Ersatzmodell der Kaskadenvorsteuerung jeweils mindestens einen Aktuator mehr aufweist, als ein diesem Soll-Ersatzmodell in der Kaskadenvorsteuerung vorhergehendes Soll-Ersatzmodell. Es ist also vorgesehen, dass die Soll-Ersatzmodelle in der Kaskade um jeweils einen Aktuator erweitert werden. Das Ist-Ersatzmodell beinhaltet alle Aktuatoren des Fahrzeugs und somit mindestens einen Aktuator mehr als das letzte Soll-Ersatzmodell.

Bevorzugt ist vorgesehen, dass ein erstes Soll-Ersatzmodell der Kaskadenvorsteuerung nur auf physikalischen Eigenschaften, insbesondere nur auf vorgebbaren physikalischen Eigenschaften des Fahrzeugs beruht. Das erste Soll-Ersatzmodell der Kaskadenvorsteuerung beziehungsweise das Soll-Ersatzmodell der niedrigsten Hierarchiestufe beruht somit nur auf physikalischen Eigenschaften und ist nicht durch das Betätigen eines Aktuators beeinflussbar. Es ist jedoch bevorzugt vorgesehen, dass durch Vorgeben physikalischer Eigenschaften das Fahrverhalten des Fahrzeugs bei Bedarf ebenfalls beeinflusst wird. Im Zusammenhang mit dem zuvor beschriebenen Merkmal, liegt somit eine Kaskadenvorsteuerung vor, die von einem Soll-Ersatzmodell ohne Aktuator ausgeht, und bei jedem folgenden Soll-Ersatzmodell einen Aktuator hinzufügt, bis zum Ist-Ersatzmodell, das alle relevanten Aktuatoren umfasst.

Gemäß einer vorteilhaften Weiterbildung der Erfindung ist vorgesehen, dass dem jeweiligen Soll-Ersatzmodell jeweils diejenigen physikalischen und/oder fahrdynamischen Fahrzeugparameter des Fahrzeugs zugeordnet werden, die durch den jeweiligen, dem Soll-Ersatzmodell zugeordneten Aktuator am stärksten beeinflussbar sind. Jeder Kaskade der Kaskadenvorsteuerung werden damit genau die fahrdynamischen Eigenschaften beziehungsweise die physikalischen Fahrzeugparameter zugeordnet, die sich von dem betreffenden Aktuator besonders gut beeinflussen lassen. Vorzugsweise wird zum Beispiel eine Agilitätssteigerung, beispielsweise durch Verlängern des Radstandes oder durch Absenken des Trägheitsmomentes des Fahrzeugs, der Hinterachsenlenkung zugeordnet, während eine Veränderung der Balance, also ein Anheben/Absenken des Schwerpunktes oder eine Modifikation des Vorderachsreibwertes, einem Torque-Vectoring-Differenzial oder einer Bremseinrichtung als Aktuator zugeordnet werden.

Gemäß einer vorteilhaften Weiterbildung der Erfindung ist vorgesehen, dass die Stärke des jeweiligen Einflusses der unterschiedlichen Aktuatoren auf die Fahrzeugparameter des Fahrzeugs durch vorherige Versuche ermittelt und/oder berechnet werden. Bevorzugt werden die fahrdynamischen Eigenschaften des Fahrzeugs im ersten Schritt in die vier grundlegenden Eigenschaften Lenkwinkelbedarf, Agilität, Balance und Gierdämpfung unterteilt und eine Korrelation zwischen diesen Eigenschaften und physikalischen Parametern hergeleitet. Anschließend erfolgt bevorzugt eine Analyse, um den Einfluss der einzelnen Aktuatoren auf die genannten Eigenschaften zu ermitteln.

Weiterhin ist bevorzugt vorgesehen, dass die Betätigung der Aktuatoren in Abhängigkeit von einem durch einen Bediener des Fahrzeugs vorgegebenen Soll-Fahrverhalten erfolgt. Hierbei wird dem Bediener beziehungsweise dem Fahrer des Fahrzeugs die Möglichkeit gegeben, das Soll-Fahrverhalten des Fahrzeugs vorzugeben beziehungsweise zu beeinflussen. Dadurch kann der Bediener ein individuelles Fahrverhalten des Fahrzeugs einrichten und nutzen. Im Unterschied zu vorbekannten Einstellmöglichkeiten durch den Fahrer, die nur eine Wahl zwischen verschiedenen Fahrprogrammen ermöglichen, dem Fahrer jedoch nicht das individuelle Einstellen des Soll-Fahrverhaltens erlauben, ist dem Fahrer durch die vorteilhafte Ausbildung auf anschauliche Art und Weise klar, was genau er an dem Fahrverhalten des Fahrzeugs verstellt. Darüber hinaus kann er die Feinjustierung selber vornehmen und muss sich nicht mit voreingestellten Fahrprogrammen begnügen.

Besonders bevorzugt ist dabei vorgesehen, dass dem Bediener wenigstens ein, insbesondere mehrere einstellbare Fahrverhalten angezeigt werden, aus dem/denen der Bediener durch Betätigung einer Eingabevorrichtung das mindestens eine Soll-Fahrverhalten, insbesondere kontinuierlich, auswählt. Dem Fahrer wird bevorzugt visuell dargestellt, welche einstellbaren Fahrverhalten ihm zur Verfügung gestellt werden. Bei diesen Fahrverhalten handelt es sich beispielsweise um die "Balance", das "Ansprechverhalten" und die "Stabilisierung" seines Fahrzeugs. Zur kontinuierlichen Einstellung ist bevorzugt vorgesehen, dass die Fahrverhalten in der Art eines Schiebereglers dargestellt werden, bei dem der Fahrer durch Verschieben eines (digitalen) Schiebers das Soll-Fahrverhalten kontinuierlich vorgibt. Dabei kann der Fahrer insbesondere zwischen einem Minimalwert (min) oder einem Maximalwert (max) für das auszuwählende Fahrverhalten kontinuierlich einen Soll-Wert wählen.

Weiterhin ist bevorzugt vorgesehen, dass das wenigstens eine von dem Bediener eingestellte Soll-Fahrverhalten abrufbar gespeichert wird. Somit kann bei einem Fahrerwechsel der jeweilige Fahrer beispielsweise durch Betätigen eines Fahrprogrammschalters aus vorher individuell eingestellten Soll-Fahrverhalten eines auswählen.

Die erfindungsgemäße Vorrichtung mit den Merkmalen des Anspruchs 9 zeichnet sich durch ein speziell hergerichtetes Steuergeräts aus, das Mittel zur Durchführung des erfindungsgemäßen Verfahrens aufweist. Bei den Mitteln handelt es sich insbesondere um einen Prozessor sowie um einen nicht flüchtigen Speicher, in welchem die zuvor genannten Daten hinterlegt werden können.

Gemäß einer vorteilhaften Weiterbildung der erfindungsgemäßen Vorrichtung ist bevorzugt vorgesehen, dass diese eine Anzeigevorrichtung und eine Eingabevorrichtung aufweist, wobei die Anzeigevorrichtung das wenigstens eine Fahrverhalten des Fahrzeugs anzeigt, wobei der Bediener durch die Eingabevorrichtung aus dem angezeigten Fahrverhalten das Soll-Fahrverhalten auswählen kann. Besonders bevorzugt ist vorgesehen, dass die Anzeigevorrichtung als Display ausgebildet ist, das zur Integration der Eingabevorrichtung bevorzugt als berührungsempfindliches oder berührungsfrei arbeitendes Display (Touch Screen) ausgebildet ist. Zweckmäßigerweise erfolgt die Anzeige des Fahrverhaltens sowie die Auswahl des Soll-Fahrverhaltens wie zuvor beschrieben.

Das erfindungsgemäße Computerprogramm mit den Merkmalen des Anspruchs 11 zeichnet sich dadurch aus, dass es alle Schritte des erfindungsgemäßen Verfahrens ausführt, wenn es auf einem Computer läuft.

Das erfindungsgemäße Computer-Programmprodukt mit den Merkmalen des Anspruchs 12 weist einen auf einem maschinenlesbaren Träger gespeicherten Programmcode zur Durchführung des erfindungsgemäßen Verfahrens auf, wenn das Programm auf einem Computer ausgeführt wird. Es ergeben sich hierbei für die Vorrichtung, das Computerprogramm und das Computer-Programmprodukt die bereits genannten Vorteile.

Im Folgenden soll die Erfindung anhand der Zeichnung näher erläutert werden. Dazu zeigen

Figur 1    ein Ausführungsbeispiel eines vorteilhaften Verfahrens zum Betreiben eines Fahrzeugs,

Figur 2    eine Zuordnung physikalischer Fahrzeugparameter zu fahrdynamischen Eigenschaften des Fahrzeugs, und

Figur 3    eine beispielhafte Anzeige zur Auswahl eines Soll-Fahrverhaltens des Fahrzeugs.

Im Folgenden soll ein neuer Ansatz für eine Steuerung mehrerer Aktuatoren eines Fahrzeugs, die die Fahrdynamik beziehungsweise vorliegend das Gierverhalten des Fahrzeugs beeinflussen können, beschrieben werden, der keinen Rechenzeit-intensiven Optimierer benötigt, und von einem einzigen Soll-Gierverhalten des Fahrzeugs ausgeht. Hierzu wird ein Ersatzmodell eines Ist-Fahrzeugs verwendet, welches die Lateraldynamik von Kraftfahrzeugen bis in den Grenzbereich mit guter Genauigkeit abbildet.

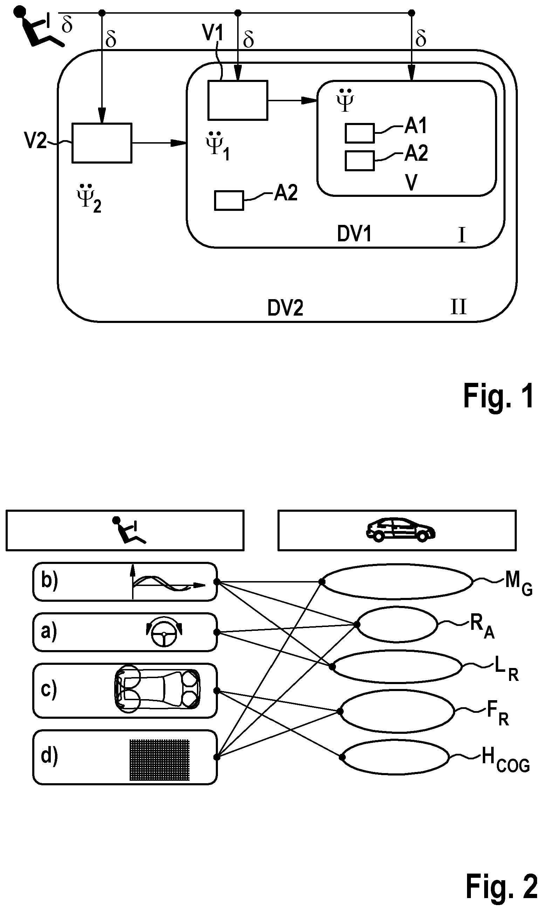

Figur 1 zeigt hierzu ein Ausführungsbeispiel einer vorteilhaften Kaskadenvorsteuerung für ein Fahrzeug, das zumindest zwei Aktuatoren A1 und A2 aufweist, die zur Beeinflussung der Fahrdynamik des Kraftfahrzeugs ausgebildet sind.

Die Kaskadenvorsteuerung geht von einem Soll-Gierverhalten $\ddot{\Psi}_2$ aus. Das Gierverhalten wird beispielsweise in Abhängigkeit des Lenkwinkels $\delta$ vorgegeben. Im vorliegenden Ausführungsbeispiel ist die Kaskadenvorsteuerung in zwei Kaskaden I und II aufgeteilt. Jeder der Kaskaden I, II ist ein Soll-Ersatzmodell des zu betreibenden Kraftfahrzeugs zugeordnet. Die Soll-Ersatzmodelle unterscheiden sich dadurch, dass sie ausgehend von dem Istmodell V jeweils einen Aktuator weniger aufweisen. Während das Soll-Ersatzmodell der Kaskade II allein auf physikalischen Eigenschaften des Kraftfahrzeugs beruht und insofern keinen ansteuerbaren Aktuator umfasst, weist das Soll-Ersatzmodell der Kaskade I den Aktuator A2 auf, so dass durch die Vorsteuerung V2 der Aktuator A2 angesteuert wird. Das darauffolgende Istmodell V weist zusätzlich den Aktuator A1 auf, so dass durch die Vorsteuerung V1 der Aktuator A1 angesteuert wird.

In dem Ausführungsbeispiel weist das Ist-Fahrzeug beide Aktuatoren A1, A2, also Bremse und Hinterachslenkung, auf und wird über die Kaskadenvorsteuerung der Bremse (A1) so verändert, dass es dem Fahrverhalten des Soll-Fahrzeugs DV1 entspricht, das wiederum nur noch den Aktuator A2 beziehungsweise die Hinterachslenkung, besitzt. Das Soll-Fahrzeug DV1 wird hingegen mittels der Hinterachslenkung (Aktuator 2) derart beeinflusst, dass sich dieses wie das Soll-Fahrzeug DV2 verhält, welches keinen Aktuator mehr beinhaltet, beziehungsweise bei welchem alle zur Verfügung stehenden Aktuatoren A1, A2 bereits betätigt wurden.

Die zugrundeliegende Idee soll im Folgenden anhand eines Kraftfahrzeugs mit drei fahrdynamischen Aktuatoren A1, A2, A3 gezeigt werden.

Die Gierdynamik eines Kraftfahrzeugs mit drei fahr- beziehungsweise querdynamischen Aktuatoren A1, A2, A3, lässt sich durch ein mathematisches Ersatzmodell beschreiben:

$$\ddot{\Psi} = f(x,\delta) + g_1(x)*M_1 + g_2(x)*M_2 + g_3(x)*M_3 \qquad (1a)$$

Dabei bezeichnet x den Zustandsvektor, beispielsweise bestehend aus den beiden Zuständen "Schwimmwinkel" und "Gierrate", $\delta$ den Lenkwinkel und $M_1$, $M_2$. $M_3$ die Giermomente, die dem Fahrzeug von den unterschiedlichen Aktuatoren A1, A2, A3 aufgeprägt werden. Für eine sukzessive beziehungsweise kaskadierte Modifikation des Fahrzeugverhaltens werden mehrere Soll-Ersatzmodelle f1, f2, f3 eingeführt, die kaskadiert zu dem Ist-Ersatzmodell führen. Bei einer Anzahl von n Aktuatoren werden entsprechend n Soll-Ersatzmodelle eingefügt. Die Soll-Ersatzmodelle werden vom Soll-Ersatzmodell der äußersten Kaskade ausgehend um jeweils einen Aktuator erweitert, wobei jeder Kaskade genau die fahrdynamischen Eigenschaften beziehungsweise die physikalischen Fahrzeugparameter zugeordnet werden, die sich von dem betreffenden Aktuator besonders gut beeinflussen lassen. In dem vorliegenden Ausführungsbeispiel werden die folgenden Soll-Ersatzmodelle $\ddot{\Psi}_1$, $\ddot{\Psi}_2$ und $\ddot{\Psi}_3$ eingeführt:

$$\ddot{\Psi}_1 = f_1(x,\delta) + g_2(x) * M_2 + g_3(x) * M_3$$

$$\ddot{\Psi}_2 = f_2(x,\delta) + g_3(x) * M_3 \tag{1b}$$

$$\ddot{\Psi}_3 = f_3(x,\delta)$$

Dabei gilt die Annahme

$$\ddot{\Psi} = \ddot{\Psi}_1 = \ddot{\Psi}_2 = \ddot{\Psi}_3 . \tag{2}$$

Das bedeutet, dass alle Ersatzmodelle der Kaskade dasselbe Gierverhalten beziehungsweise dasselbe Soll-Gierverhalten aufweisen. Während dieses Gierverhalten beim Ist-Fahrzeug durch das natürliche Fahrverhalten sowie das Zusammenwirken aller Aktuatoren entsteht, weist das Soll-Ersatzmodell f3 ein ebensolches Gierverhalten aus, das sich nicht durch Stelleingriffe, sondern allein durch Modifikation physikalischer Fahrzeugparameter (gegenüber dem Ist-Fahrzeug) ergibt. Auf diese Weise wird ein stets natürliches beziehungsweise "rundes" fahrdynamisches Verhalten erzielt, das sich für den Fahrer nicht künstlich oder "nach Regeleingriffen" anfühlt, da sich das Soll-Ersatzmodell f3 physikalisch wie ein "ganz normales Auto ohne fahrdynamische Steller" verhält. Aus (1) und (2) ergeben sich unmittelbar die Vorsteuerungen für die einzelnen Aktuatoren A1, A2, A3:

$$f_2(x,\delta) + g_3(x) * M_3 := f_3(x,\delta) \quad \Rightarrow \quad M_3 = \frac{f_3(x,\delta) - f_2(x,\delta)}{g_3(x)} \tag{3}$$

und

$$f_1(x,\delta) + g_2(x) * M_2 + g_3(x) * M_3 := f_2(x,\delta) + g_3(x) * M_3 \quad \Rightarrow$$

$$M_2 = \frac{f_2(x,\delta) - f_1(x,\delta)}{g_2(x)}$$

usw.

Die Formeln (1a), (1b), (2) und (3) geben lediglich die Grundidee des Verfahrens wieder. Details, wie beispielsweise eine numerische Integration der Nulldynamik (da für die Auswertung von (3) die Kenntnis des gesamten Zustandsvektors - und somit beispielsweise auch die des Schwimmwinkels - erforderlich ist) oder Maßnahmen, um die Stabilität des jeweiligen Soll-Ersatzmodells bei hochdynamischen Manövern sicherzustellen, sind hier nicht näher ausgeführt.

Maßgeblich für den Erfolg des vorteilhaften Verfahrens ist auch eine Strategie zur Aufteilung der Soll-Fahrzeugparameter auf die einzelnen Kaskaden I und II. Dafür wird das fahrdynamische Verhalten zunächst in vier grundlegende Eigenschaften a) Lenkwinkelbedarf, b) Agilität, c) Balance und d) Gierdämpfung unterteilt und eine Korrelation zwischen diesen Eigenschaften und physikalischen Parametern hergeleitet, wie in Figur 2 beispielhaft dargestellt.

Figur 2 zeigt hierzu eine Zuordnung einzelner Fahrzeugparameter wie das Trägheitsmoment $M_G$; den Radstand

$R_A$, eine Lenkübersetzung $L_R$; Reibwerte $F_R$ und die Höhe $H_{COG}$ des Schwerpunkts des Kraftfahrzeugs bezüglich der Fahrbahn.

Zweckmäßigerweise erfolgt nach dieser Zuordnung eine Analyse, wie stark sich die Eigenschaften mit den einzelnen Aktuatoren beeinflussen lassen. Die Analyse kann dabei rechnerisch oder mittels Versuchen durchgeführt werden. Anschließend wird darauf erkannt, mit welchen Aktuatoren welche Eigenschaften am besten beeinflussbar sind. Entsprechend werden diese Parameter in der Kaskadenvorsteuerung dem jeweiligen Soll-Ersatzmodell und dem jeweiligen Aktuator zugeordnet.

Insgesamt ergibt sich hierdurch das vorteilhafte Verhalten des Kraftfahrzeugs, bei der Fahrer oder Mitfahrer das Gefühl haben, dass sich das Fahrzeug natürlich verhält und keine Reglereingriffe spürbar sind.

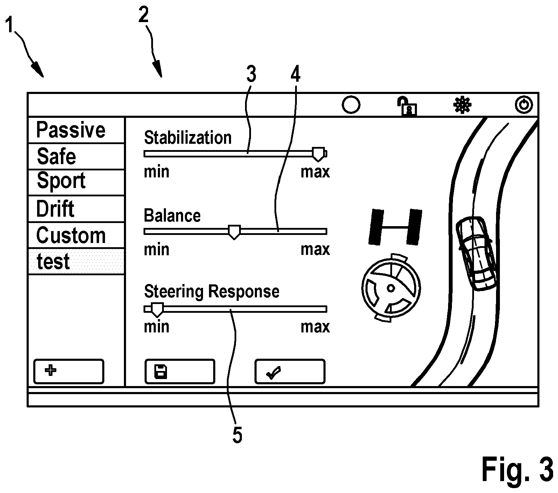

Figur 3 zeigt die Anzeige einer Anzeigevorrichtung 1, die eine integrierte Eingabevorrichtung 2 aufweist, die berührungsempfindlich oder berührungsfrei arbeitend ausgebildet ist. Die Anzeigevorrichtung 1 ist optional als sogenannter Touchscreen ausgebildet. Durch die Anzeige werden dem Fahrer oder Bediener des Fahrzeugs mehrere Fahrverhalten "Stabilisierung" (Stabilization), "Balance" (Balance) und "Lenk-Verhalten" (Steering Response) jeweils als Schieberegler 3, 4 und 5 angezeigt, die durch den Bediener verstellbar sind. Dabei kann der Bediener den jeweiligen Schieberegler 5 kontinuierlich verstellen, um ein individuelles Soll-Fahrverhalten einzustellen. Daneben wird dem Fahrer anschaulich die Auswirkung des von ihm gewünschten Soll-Fahrverhaltens auf das Fahrzeug durch Piktogramme oder vereinfachte Fahrverhaltensdarstellungen angezeigt, so dass der Fahrer sich darüber im Klaren ist, welche Auswirkung das von ihm gewählte Fahrverhalten auf sein Fahrzeug hat. Weiterhin wird dem Fahrer die Möglichkeit gegeben, die von ihm gewählten Einstellungen als Fahrprogramm zu speichern. Gemäß dem vorliegenden Ausführungsbeispiel werden dem Fahrer bereits mehrere Fahrprogramme "Passiv" (Passive), "sicher" (Safe), "Sport" (Sport) und "Drift" (Drift) zur Verfügung gestellt, die er direkt auswählen kann. Die Programme "Angepasst" (Custom) und "test" (test) sind von dem Bediener frei programmierbar und vorgebbar. Selbstverständlich kann er auch noch weitere Programme hinzufügen. Bevorzugt ist vorgesehen, dass der Bediener voreingestellte Fahrprogramme mit entsprechend vorgegebenen Soll-Fahrverhalten beim Hersteller erwerben und in sein Betriebssystem einfügen kann. Dies kann beispielsweise durch eine Internet-Verbindung oder dergleichen erfolgen.

**Patentansprüche**

1. Verfahren zum Betreiben eines Fahrzeugs, insbesondere Kraftfahrzeugs, das mindestens zwei betätigbare Aktuatoren (A1,A2) aufweist, die ein Fahrverhalten, insbesondere Gierverhalten, des Fahrzeugs bei Bedarf beeinflussen, **dadurch gekennzeichnet, dass** die Aktuatoren (A1,A2) in Abhängigkeit von mindestens einem Soll-Fahrverhalten, insbesondere Soll-Gierverhalten ($\ddot{\Psi}_2$), des Fahrzeugs durch eine Kaskadenvorsteuerung betätigt werden, dass für die Kaskadenvorsteuerung Ersatzmodelle für das Fahrzeug kaskadenartig berücksichtigt werden, wobei wenigstens zwei unterschiedliche Soll-Ersatzmodelle erstellt werden, die sich durch wenigstens einen betätigbaren Aktuator (A1,A2) voneinander unterscheiden, und dass ein Soll-Ersatzmodell der Kaskadenvorsteuerung jeweils mindestens einen Aktuator (A1,A2) mehr aufweist als ein diesem Soll-Ersatzmodell in der Kaskadenvorsteuerung vorhergehendes Soll-Ersatzmodell.

2. Verfahren nach einem der vorhergehenden Ansprüche, **dadurch gekennzeichnet, dass** den Soll-Ersatzmodellen dasselbe Soll-Fahrverhalten vorgegeben wird.

3. Verfahren nach einem der vorhergehenden Ansprüche, **dadurch gekennzeichnet, dass** ein erstes Soll-Ersatzmodell der Kaskadenvorsteuerung nur auf physikalischen Eigenschaften, insbesondere nur auf vorgebbaren physikalischen Eigenschaften des Fahrzeugs beruht.

4. Verfahren nach einem der vorhergehenden Ansprüche, **dadurch gekennzeichnet, dass** dem jeweiligen Soll-Ersatzmodell jeweils diejenigen physikalische und/oder fahrdynamische Fahrzeugparameter des Fahrzeugs zugeordnet werden, die durch den jeweiligen, dem Soll-Ersatzmodell zugeordneten Aktuator (A1,A2) am stärksten beeinflussbar sind.

5. Verfahren nach einem der vorhergehenden Ansprüche, **dadurch gekennzeichnet, dass** die Stärke des jeweiligen Einflusses der unterschiedlichen Aktuatoren (A1,A2) auf die Fahrzeugparameter des Fahrzeugs durch vorherige Versuche ermittelt und/oder berechnet werden.

6. Verfahren nach einem der vorhergehenden Ansprüche, **dadurch gekennzeichnet, dass** die Betätigung der Aktuatoren (A1,A2) in Abhängigkeit von einem durch einem Bedienen des Fahrzeugs Soll-Verhaltens erfolgt.

**7.** Verfahren nach einem der vorhergehenden Ansprüche, **dadurch gekennzeichnet, dass** dem Bediener wenigstens ein, insbesondere mehrere einstellbare Fahrverhalten angezeigt werden, aus dem/denen der Bediener durch Betätigung einer Eingabevorrichtung (2) das Soll-Fahrverhalten, insbesondere kontinuierlich auswählt.

**8.** Verfahren nach einem der vorhergehenden Ansprüche, **dadurch gekennzeichnet, dass** wenigstens ein von dem Bediener einstellbares Soll-Fahrverhalten abrufbar gespeichert wird.

**9.** Vorrichtung zum Betreiben eines Fahrzeugs, insbesondere Kraftfahrzeugs, das mindestens zwei betätigbare Aktuatoren (A1,A2) aufweist, die die Fahrdynamik des Fahrzeugs bei Bedarf beeinflussen, **dadurch gekennzeichnet, dass** ein speziell hergerichtetes Steuergerät vorgesehen ist, das Mittel zur Durchführung des Verfahrens nach einem der Ansprüche 1 bis 8 enthält.

**10.** Vorrichtung nach Anspruch 9, **dadurch gekennzeichnet, dass** eine Anzeigevorrichtung, die wenigstens ein Fahrverhalten des Fahrzeugs anzeigt, und eine Eingabevorrichtung (2), durch welche der Bediener das Soll-Fahrverhalten aus dem angezeigten Fahrverhalten auswählen/vorgeben kann, vorgesehen sind.

**11.** Computerprogramm, das alle Schritte eines Verfahrens nach einem der Ansprüche 1 bis 8 ausführt, wenn das Programm auf einem Computer läuft.

**12.** Computer-Programmprodukt mit einem auf einem maschinenlesbaren Träger gespeicherten Programmcode zur Durchführung des Verfahrens nach einem der Ansprüche 1 bis 8, wenn das Programm auf einem Computer ausgeführt wird.

## Claims

**1.** Method for operating a vehicle, in particular a motor vehicle, which has at least two activatable actuators (A1, A2) which influence a driving behaviour, in particular yaw behaviour of the vehicle when necessary, **characterized in that** the actuators (A1, A2) are activated as a function of at least one set point driving behaviour, in particular set point yaw behaviour ($\ddot{\psi}_2$) of the vehicle, by means of a cascade pilot controller, **in that** for the cascade pilot controller substitute models for the vehicle are taken into account in a cascade-like fashion, wherein at least two different set point substitute models are produced which differ from one another in at least one activatable actuator (A1, A2), and **in that** a set point substitute model of the cascade pilot controller has in each case at least one actuator (A1, A2) more than a set point substitute model which precedes this set point substitute model in the cascade pilot controller.

**2.** Method according to one of the preceding claims, **characterized in that** the same set point driving behaviour is predefined to the set point substitute models.

**3.** Method according to one of the preceding claims, **characterized in that** a first set point substitute model of the cascade pilot controller is based only on physical properties, in particular only on predefineable physical properties of the vehicle.

**4.** Method according to one of the preceding claims, **characterized in that** in each case those physical and/or vehicle movement dynamics vehicle parameters of the vehicle which can be influenced to the greatest extent by the respective actuator (A1, A2) which is assigned to the set point substitute model are assigned to the respective set point substitute model.

**5.** Method according to one of the preceding claims, **characterized in that** the magnitude of the respective influence of the different actuators (A1, A2) on the vehicle parameters of the vehicle is determined and/or calculated by means of previous tests.

**6.** Method according to one of the preceding claims, **characterized in that** the activation of the actuators (A1, A2) takes place as a function of a set point behaviour by means of operator control of the vehicle.

**7.** Method according to one of the preceding claims, **characterized in that** at least one settable driving behaviour, in particular a plurality of settable driving behaviours, are displayed to the operator, from which driving behaviour/behaviours the operator selects, in particular continuously, the set point driving behaviour by activating an input device (2).

8. Method according to one of the preceding claims, **characterized in that** at least one set point driving behaviour which can be adjusted by the driver is stored in a retrievable fashion.

9. Device for operating a vehicle, in particular a motor vehicle, which has at least two activatable actuators (A1, A2) which influence the vehicle movement dynamics of the vehicle where necessary, **characterized in that** a specially configured control unit is provided which contains means for carrying out the method according to one of Claims 1 to 8.

10. Device according to Claim 9, **characterized in that** a display device which displays at least one driving behaviour of the vehicle, and an input device (2) by which the operator can select/predefine the set point driving behaviour from the displayed driving behaviour, are provided.

11. Computer program which executes all the steps of the method according to one of Claims 1 to 8 when the program runs on a computer.

12. Computer program product having a program code, stored on a machine-readable carrier, for carrying out the method according to one of Claims 1 to 8, when the program is executed on a computer.


**Revendications**

1. Procédé pour faire fonctionner un véhicule, en particulier un véhicule automobile qui comporte au moins deux actionneurs actionnables (A1, A2) ayant une influence, le cas échéant, sur le comportement de conduite du véhicule, notamment le comportement en lacet, **caractérisé en ce que** les actionneurs (A1, A2) sont actionnés par une commande pilote en cascade en fonction d'au moins un comportement de conduite souhaité, en particulier un comportement en lacet souhaité ($\ddot{\psi}_2$) du véhicule, **en ce que** des modèles de remplacement du véhicule sont pris en compte en cascade pour la commande pilote en cascade, dans lequel il est établi au moins deux modèles de remplacement souhaités différents qui diffèrent l'un de l'autre par au moins un actionneur actionnable (A1, A2) et **en ce qu'**un modèle de remplacement souhaité de la commande pilote en cascade comporte respectivement au moins un actionneur (A1, A2) en plus qu'un modèle de remplacement souhaité précédant ledit modèle souhaité de remplacement dans la commande pilote en cascade.

2. Procédé selon l'une des revendications précédentes, **caractérisé en ce qu'**un même comportement de conduite souhaité est prédéfini pour les modèles de remplacement souhaités.

3. Procédé selon l'une des revendications précédentes, **caractérisé en ce qu'**un premier modèle de remplacement souhaité de la commande pilote en cascade est basé uniquement sur des propriétés physiques, en particulier uniquement sur des propriétés physiques prédéfinissables du véhicule.

4. Procédé selon l'une des revendications précédentes, **caractérisé en ce que** les paramètres de véhicule physiques et/ou dynamiques de conduite du véhicule qui peuvent être le plus fortement influencés par l'actionneur respectif (A1, A2) associé au modèle de remplacement souhaité sont respectivement associés au modèle de remplacement souhaité respectif.

5. Procédé selon l'une des revendications précédentes, **caractérisé en ce que** l'intensité de l'influence respective des différents actionneurs (A1, A2) sur les paramètres du véhicule est déterminée et/ou calculée par des essais préalables.

6. Procédé selon l'une des revendications précédentes, **caractérisé en ce que** les actionneurs (A1, A2) sont actionnés en fonction d'un comportement souhaité obtenu en faisant fonctionner le véhicule.

7. Procédé selon l'une des revendications précédentes, **caractérisé en ce qu'**au moins un, en particulier une pluralité de comportements de conduite réglables, sont présentés à l'opérateur, à partir duquel/desquels l'opérateur sélectionne le comportement de conduite souhaité, en particulier en continu, en actionnant un dispositif de saisie (2).

8. Procédé selon l'une des revendications précédentes, **caractérisé en ce qu'**au moins un comportement de conduite souhaité réglable par l'opérateur est mémorisé de manière à ce qu'il puisse être extrait.

9. Dispositif pour faire fonctionner un véhicule, en particulier un véhicule automobile qui comporte au moins deux actionneurs actionnables (A1, A2) ayant une influence, le cas échéant, sur la dynamique de conduite du véhicule, **caractérisé en ce qu'**il est prévu un appareil de commande spécialement configuré qui comporte des moyens destinés à mettre en oeuvre le procédé selon l'une des revendications 1 à 8.

10. Dispositif selon la revendication 9, **caractérisé en ce qu'**il est prévu un dispositif d'affichage qui affiche au moins un comportement de conduite du véhicule, et un dispositif de saisie (2) au moyen duquel l'opérateur peut sélectionner/prédéfinir le comportement de conduite souhaité à partir du comportement de conduite affiché.

11. Programme d'ordinateur qui exécute toutes les étapes d'un procédé selon l'une des revendications 1 à 8 lorsque le programme est exécuté sur un ordinateur.

12. Produit de programme d'ordinateur comportant un code de programme stocké sur un support lisible par machine pour mettre en oeuvre le procédé selon l'une des revendications 1 à 8 lorsque le programme est exécuté sur un ordinateur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004035004 A1
- DE 10223734 A1
- DE 102005037479 A1